(19) Europäisches Patentamt
European Patent Office
Office européen des brevets

(11) EP 1 171 477 B1

(12) # FASCICULE DE BREVET EUROPEEN

(45) Date de publication et mention de la délivrance du brevet:
**26.03.2003 Bulletin 2003/13**

(21) Numéro de dépôt: **00910939.8**

(22) Date de dépôt: **14.03.2000**

(51) Int Cl.$^7$: **C08F 4/52**, C08F 10/00, C08F 297/06, C08F 297/08

(86) Numéro de dépôt international:
**PCT/FR00/00614**

(87) Numéro de publication internationale:
**WO 00/056778 (28.09.2000 Gazette 2000/39)**

(54) **PROCEDE DE COPOLYMERISATION ET COPOLYMERES AINSI OBTENUS**

VERFAHREN ZUR COPOLYMERISATION UND DADURCH ERHALTENE COPOLYMERISATE

METHOD FOR COPOLYMERIZATION AND RESULTING COPOLYMERS

(84) Etats contractants désignés:
**AT BE CH CY DE DK ES FI FR GB GR IE IT LI LU MC NL PT SE**

(30) Priorité: **24.03.1999 FR 9903669**

(43) Date de publication de la demande:
**16.01.2002 Bulletin 2002/03**

(73) Titulaire: **Atofina**
**92800 Puteaux (FR)**

(72) Inventeurs:
- **DESURMONT, Guillaume**
  **Elf Atochem J. K. T. Ctr SCB**
  **Kyoto 600-8815 (JP)**
- **YASUDA, Hajime**
  **Higashihiroshima-shi Hiroshima-ken (JP)**
- **MALINGE, Jean**
  **F-64300 Loubieng (FR)**

(74) Mandataire: **Cabinet Hirsch**
**34, Rue de Bassano**
**75008 Paris (FR)**

(56) Documents cités:

| | |
|---|---|
| **EP-A- 0 462 588** | **WO-A-99/11684** |
| **US-A- 4 454 306** | **US-A- 4 576 994** |
| **US-A- 5 066 739** | **US-A- 5 218 064** |
| **US-A- 5 700 896** | |

- **YASUDA H ET AL: "Polymerization of Olefins by Rare Earth Metal Complex with Bulky Substituents" , TETRAHEDRON,NL,ELSEVIER SCIENCE PUBLISHERS, AMSTERDAM, VOL. 51, NR. 15, PAGE(S) 4563-4570 XP004105021 ISSN: 0040-4020 cité dans la demande page 4567**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a pour objet un nouveau procédé de préparation de copolymères blocs, ainsi que certains de ces copolymères blocs.

Les copolymères blocs sont généralement connus. Cependant, il est aussi connu qu'il est difficile de préparer des copolymères blocs dont l'un des blocs est une polyoléfine (PO), surtout si on souhaite que l'alphaoléfine soit insérée de façon régulière pour conduire à un copolymère stéréo- et/ou régiorégulier. Il est aussi connu qu'il est (quasi)impossible de préparer des copolymères blocs dont les deux blocs sont des polyoléfines, qu'elles soient cristallines ou amorphes

Yamahiro et al, Macromol. Chem. Phys, 200, 134-141 (1999), décrit un procédé de stopped-flow polymerization, afin d'obtenir des copolymère PP/EP blocs "vrais". Cependant, les copolymères produits sont limités en terme de masse moléculaire, puisqu'ils présentent un poids moléculaire Mn inférieur ou égal à 16000 et un indice de polydispersité compris entre 3.0 et 3.3. D'autres caractéristiques de masse moléculaire sont exclues par ce type de technique: notamment des masses moléculaires plus élevées ne peuvent pas être atteintes, car elles sont fonction du temps de polymérisation qui ne peut qu'être court (de l'ordre de 0,1 à 0,2 s) et en tous cas inférieur au temps de croissance d'une chaîne; notamment aussi des indices de polydispersité plus faibles ne peuvent pas être atteints, car la stopped-flow polymerization n'est pas une vraie polymérisation avec des espèces vivantes mais comprend beaucoup de réactions de transfert.

Ainsi, il n'existe pas à ce jour de copolymère vrai PP/EP, avec un bloc PP et un bloc EP liés ensemble, qui présente une masse moléculaire suffisante. Ce copolymère PP/EP est un copolymère PO cristalline/PO amorphe, qui trouverait une application intéressante dans des mélanges de polymères PP/EP. Dans ces mélanges, le PP cristallin forme la phase continue, qui est modifiée par l'adjonction de copolymère EP (plus spécifiquement EPR, qui est élastomère) qui forme une phase dispersée sous forme de nodules. Un copolymère vrai ajouté à ce mélange jouerait un rôle similaire à celui joué par un émulsifiant dans les émulsions, en améliorant la compatibilité des phases et finalement améliorerait le compromis choc/rigidité.

Ce même problème de difficulté de préparation de copolymères blocs "vrais" apparaît avec des copolymères dont l'un des blocs est un bloc d'un monomère polaire, comme le MMA.

La demande de brevet EP-A-0634429 au nom de Mitsui décrit la préparation de copolymères blocs, un bloc étant une polyoléfine et un bloc étant dérivé de monomère vinyl, vinylidène ou lactone. Le catalyseur utilisé est un complexe alkyl d'un métal du groupe des terres rares, avec des cycles cyclopentadiènes pontés (par un groupe diméthylsilylene). Ce document décrit en particulier le catalyseur $Me_2Si(2\text{-}Me_3Si,4\text{-}tBuCp)_2YCH(SiMe_3)_2$, avec éventuellement un donneur type THF complexé au métal. Les copolymères obtenus ne sont cependant pas satisfaisants, car la partie polyoléfine représente une partie trop faible du copolymère final. De plus, si les valeurs de polydispersité apparaissent comme acceptables, c'est uniquement parce que ces valeurs sont dérivés de la partie PMMA représentant la quasi-totalité du copolymère. De plus, les catalyseurs ne fournissent pas, en fait, de vrais copolymères. En effet, les réactions de transfert (à savoir les réactions qui mettent fin au caractère vivant de la polymérisation) importantes conduisent à la formation non de copolymères vrais mais de mélange d'homopolymères et de copolymères. De plus, les temps de réaction sont assez longs.

L'article de Yasuda et al., Tetrahedron, Vol.51, No.15, pp.4563-4570, 1995, décrit des dérivés hydrures de lanthanides, sous forme de complexe avec des cycles cyclopentadiènes pontés (par un groupe diméthylsilylene), ces cycles cyclopentadiènes portant des substituants présentant un encombrement stérique important ("bulky substituent"). Ce document décrit en particulier le catalyseur hydrure $Me_2Si(2\text{-}Me_3Si,4\text{-}Me_2tBuSiCp)_2YH$ (représenté sous sa forme dimère). Ces composés sont obtenus in situ par hydrogénolyse du dérivé alkyl de départ, puis ils sont utilisés pour la polymérisation d'alpha-oléfines. Bien que de tels composés soient décrits comme présentant une activité de polymérisation des alpha-oléfines, supérieure aux dérivés alkyl dont ils dérivent, les temps de polymérisation sont encore très longs, de l'ordre de la demi-journée ou de la journée.

Ces catalyseurs hydrures présentent aussi l'inconvénient classique des hydrures, à savoir les dérivés hydrures sont connus pour être instables et se décomposer rapidement à température élevée.

On recherche donc un procédé efficace de préparation de copolymères blocs, notamment d'une part de copolymères dont l'un des blocs comprend une partie polaire et d'autre part de copolymères dont les deux blocs sont des polyoléfines.

Ainsi, l'invention offre un procédé de préparation de copolymères blocs comprenant les étapes de polymérisation d'un premier monomère constitué par une alpha-oléfine contenant de 3 à 20 atomes de carbone en un premier bloc isotactique, à l'aide d'un catalyseur, puis polymérisation d'au moins un second monomère,
ledit catalyseur étant sous la forme d'un complexe hydrure d'un métal trivalent du groupe des terres rares présentant la formule I:

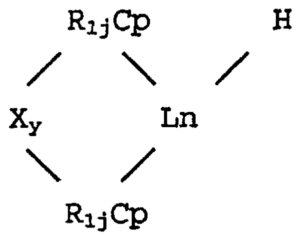

dans laquelle:

Cp est un radical cyclopentadiènyle;
chaque $R_1$, identique ou différent, est un substituant du groupe cyclopentadiènyle et est un radical alkyl ou un radical hydrocarboné contenant du silicium, contenant de 1 à 6 atomes de carbone, non substitué;
chaque j, identique ou différent, vaut 1, 2 ou 3;
X est un radical divalent alkylène contenant de 1 à 20 atomes de carbone ou $Si(R)_2$ où R est un radical alkyl ayant de 1 à 4 atomes de carbone;
y vaut 1 ou 2;
Ln est Y ou Sm.

Selon un mode de réalisation, dans la formule I, X est $Si(R)_2$ où R est un radical alkyl ayant de 1 à 4 atomes de carbone.

Selon un mode de réalisation, dans la formule I, $R_{1j}Cp$ est le groupe 2-$Me_3Si$,4-$Me_2tBuSiCp$, ou le groupe 2-$Me_3Si$,4-tBuCp.

Selon un mode de réalisation, dans la formule I, Ln est Y ou Sm.

Selon un mode de réalisation, le catalyseur est $Me_2Si(2\text{-}Me_3Si,4\text{-}Me_2tBuSiCp)_2YH$ ou $Me_2Si(2\text{-}Me_3Si,4\text{-}tBuCp)_2SmH$.

Selon un mode de réalisation, le catalyseur est racémique.

Selon un mode de réalisation, le catalyseur est généré in situ en présence d'au moins une partie du premier monomère.

Selon un mode de réalisation, les blocs sont des homopolymères ou des copolymères statistiques.

Selon un mode de réalisation, le copolymère blocs comprend un bloc du premier monomère qui est une alphaoléfine et un bloc du second monomère qui est un composé vinyl, vinylidène ou lactone.

Selon ce mode de réalisation, le composé vinyl ou vinylidène est représenté par la formule

$$H_2C=CR'Z$$

dans laquelle R' est l'hydrogène ou un radical alkyle ayant de 1 à 12 atomes de carbone et Z est un radical électro-attracteur.

Selon ce mode de réalisation, le composé vinyl ou vinylidène est un ester d'un acide carboxylique insaturé.

Selon ce mode de réalisation, la polyoléfine est cristalline.

Selon un mode de réalisation, le second monomère est polaire.

Selon un mode de réalisation, le procédé est pour la préparation d'un copolymère PO/PMMA ou PO/PL.

Selon ce mode de réalisation, le bloc PO est un bloc iPO.

Selon un mode de réalisation, le copolymère blocs comprend un bloc du premier monomère qui est une première alpha-oléfine et un bloc du second monomère qui est une seconde alpha-oléfine.

Selon une variante de ce mode de réalisation, la première polyoléfine est cristalline et la seconde polyoléfine est cristalline.

Selon cette variante, le copolymère est un copolymère PP/PE.

Selon une autre variante de ce mode de réalisation, la première polyoléfine est cristalline et la seconde polyoléfine est amorphe.

Selon cette variante, le copolymère est un copolymère PP/EP.

Selon un mode de réalisation, le bloc PP est un bloc iPP.

L'invention fournit aussi un copolymère comprenant un premier bloc d'une polyoléfine cristalline et un second bloc d'une polyoléfine amorphe, à l'exclusion de copolymère PP/EP présentant une masse moléculaire Mn inférieure ou égale à 16000 et un indice de polydispersité compris entre 3 et 3,3.

Selon un mode de réalisation, le copolymère est un copolymère PP/EP, notamment dans lequel le bloc PP est un bloc iPP.

L'invention fournit aussi un copolymère comprenant un premier bloc d'une polyoléfine cristalline et un second bloc d'une polyoléfine cristalline.

L'invention fournit aussi un copolymère comprenant un premier bloc d'une polyoléfine amorphe et un second bloc d'une polyoléfine amorphe.

Selon un mode de réalisation, les blocs sont des homopolymères ou des copolymères statistiques.

L'invention est maintenant décrite plus en détails dans la description qui suit.

Catalyseur.

Le catalyseur est un organolanthanide sous la forme d'un complexe hydrure d'un métal trivalent du groupe des terres rares (ponté); avantageusement il présente la formule I:

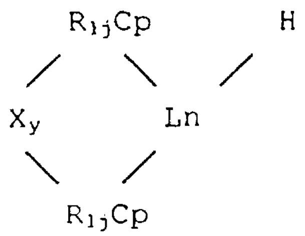

dans laquelle:

- Cp est un radical cyclopentadiènyle, substitué de préférence en position 2 et 4;
- chaque $R_1$, identique ou différent, est un substituant du groupe cyclopentadiènyle et est un radical alkyl ou un radical hydrocarboné contenant du silicium, contenant de 1 à 20 atomes de carbone, notamment de 1 à 6 atomes de carbone, éventuellement formant avec le cycle Cp auquel il est lié un cycle indényle ou fluorényle, chaque $R_1$ pouvant éventuellement être substitué par exemple par jusqu'à 3 halogènes;
- chaque j, identique ou différent, est un entier de 1 à 5 inclus, notamment j vaut 1, 2 ou 3;
- en particulier $R_{1j}Cp$ est le groupe 2-$Me_3Si$, 4-$Me_2tBuSiCp$, ou le groupe 2-$Me_3Si$,4-tBuCp;
- X est un radical divalent alkylène ou un radical divalent hydrocarboné contenant du silicium, contenant de 1 à 20 atomes de carbone, contenant éventuellement d'autres hétéroatomes tels que de l'oxygène, notamment de formule $Si(R)_2$ où R est un radical alkyl ayant de 1 à 4 atomes de carbone, en particulier $SiMe_2$;
- y vaut 1 ou 2, de préférence 1;
- Ln est un métal trivalent du groupe des terres rares choisi parmi Y, Sc, La, Ce, Pr, Nd, Pm, ,Sm, Eu, Gd, Tb, Dy, Ho, Er, Tm, Yb et Lu, en particulier Y et Sm.

Des exemples de catalyseurs sont $Me_2Si$ (2-$Me_3Si$,4-$Me_2tBuSiCp)_2YH$ et $Me_2Si$ (2-$Me_3Si$, 4-tBu-$Cp)_2SmH$.

En fait, le catalyseur peut présenter des ligands qui sont similaires à ceux rencontrés pour les catalyseurs dits "groupe IV" ou métallocène ou Kaminsky. Une géométrie contrainte peut aussi être envisagée, ainsi que d'autres ligands que ceux décrits ci-dessus en relation avec le formule I.

Selon une variante, le catalyseur est sous une forme racémique. Cette forme permet l'obtention de polymères isotactiques.

Les catalyseurs sous forme hydrure selon l'invention sont préparés par exemple par hydrogénation à partir du précurseur alkyl, par exemple par application d'hydrogène moléculaire. Les précurseurs alkyl sont décrits par exemple dans le document EP-A-0634429 au nom de Mitsui. Cette opération peut être réalisée par mise en solution du produit alkyl de départ dans un solvant (hydrocarbure aliphatique ou aromatique) ou mise en suspension dans un hydrocarbure non solvatant (hydrocarbure aliphatique ou aromatique), puis contact avec de l'hydrogène moléculaire.

Procédé de polymérisation

La polymérisation est notamment très efficace avec le catalyseur formé in-situ en présence du monomère. La preuve de cette efficacité est l'exothermicité du mélange réactionnel dès l'introduction de l'hydrogène, mettant ainsi en évidence que la réaction de polymérisation est initiée immédiatement. Ainsi, chaque précurseur alkyl conduit à une espèce hydrure potentiellement polymérisante, et qui conduit effectivement à une polymérisation. Dans le cas de la préparation de copolymères, cette formation in-situ en présence du monomère n'est pas requise; elle est cependant préférée.

Le procédé peut être mis en oeuvre avec ou sans solvant. Dans le cas sans solvant, c'est le monomère liquide lui-même qui joue ce rôle. Dans le cas avec solvant, le monomère (en solution ou en suspension) peut être sous forme gazeuse, liquide ou solide.

Le milieu de polymérisation peut donc être un milieu solvant, masse ou gazeux.

Le solvant, lorsqu'il est utilisé, peut être un hydrocarbure aliphatique ou aromatique, tel que du toluène.

La température de réaction est comprise en général entre -78°C et 150°C, de préférence de 0 à 100°C.

La pression de réaction est comprise en général entre la pression normale et 200 bar, de préférence entre 1 et 20 bar.

La durée de la réaction est comprise en général entre quelques secondes et quelques heures.

Le monomère (ou mélange de monomères) peut être ajouté en une fois ou progressivement de façon contrôlée.

Les conditions ci-dessus s'appliquent aux étapes de polymérisation tant dans le cas d'homopolymères que de copolymères, voire de terpolymères (ou plus si nécessaire).

Dans le cas de préparation de copolymères, le second monomère est ajouté par exemple directement au mélange réactionnel de la première étape. Si un solvant a été utilisé au cours de cette étape, celui-ci peut être soit conservé, soit éliminé par les techniques usuelles en prenant soin de ne pas dégrader l'espèce vivante portant la chaine polyoléfinique de la première étape, et éventuellement remplacé par un autre solvant.

Le présent procédé de polymérisation est efficace, en ce que:

- il permet de générer des poly alpha-oléfines de masse contrôlée, en limitant les réactions de transfert

- l'espèce poly alpha-oléfine est vivante et peut polymériser dans une deuxième étape un autre monomère (oléfinique, vinylique), pour conduire au copolymère bloc correspondant.

Le schéma réactionnel est le suivant. (M-H signifiant le catalyseur organolanthanide sous forme hydrure). Réaction 1 (génération d'une polyoléfine (vivante))

$$M\text{-}H + n(CH_2{=}CHR) \rightarrow M\text{-}CH_2\text{-}CR\text{-}(CH_2\text{-}CHR)_{n-1}\text{-}H$$

On évite ainsi au maximum la réaction de transfert qui produit l'espèce polymère finale suivante:

$$M\text{-}H + CH_2{=}CR\text{-}(CH_2\text{-}CHR)_n\text{-}H$$

Réaction 2 (ajout à la polyoléfine en croissance vivante du second monomère pour conduire au copolymère bloc, avec limitation de la réaction de transfert)

$$M\text{-}CH_2\text{-}CR\text{-}(CH_2\text{-}CHR)_{n-1}\text{-}H + m(CH_2{=}CHR') \rightarrow$$

$$M\text{-}CH_2\text{-}CR'\text{-}(CH_2\text{-}CHR')_{m-1}\text{-}(CH_2\text{-}CHR)_n\text{-}H$$

On contrôlera avantageusement la température du mélange réactionnel. Pour ce faire, on pourra alimenter le réacteur en continu avec le monomère; ceci permettra notamment de limiter l'exothermicité initiale.

Dans le cas où on souhaite obtenir des copolymères, on mettra en oeuvre la première étape dans des conditions similaires à celles pour les homopolymères, puis le second monomère sera ajouté au mélange réactionnel contenant encore une espèce vivante.

Les (co)polymères ainsi obtenus sont séparés par des techniques classiques.

Polymères préparés dans l'invention.

Les polymères préparés selon l'invention peuvent être des homopolymères ou copolymères statistiques (les deux ou plus monomères étant présents simultanément dans le méalnge réactionnel) ou être des copolymères blocs, voire des terpolymères ou plus si nécessaire.

L'homopolymère ou un bloc du copolymère peut être isotactique, notamment lorsque le catalyseur est sous une forme racémique (et que le monomère est prochiral).

Des exemples d'homopolymères sont les poly alpha-oléfines, l'oléfine comprenant par exemple de 3 à 20 atomes de carbone. Des exemples d'oléfine sont propylène, 1-butène, 1-hexène, 1-heptène, 1-octène, 1-décène.

Des exemples de copolymères statistiques sont les copolymères des oléfines précédentes, ou des copolymères à base d'éthylène.

Des exemples de copolymères blocs sont des copolymères comprenant un bloc du premier monomère qui est une alphaoléfine et un bloc du second monomère qui est un composé vinyl, vinylidène ou lactone.

Des exemples de composés vinyl ou vinylidène sont représentés par la formule $H_2C{=}CR'Z$, dans laquelle R' est l'hydrogène ou un radical alkyle ayant de 1 à 12 atomes de carbone et Z est un radical électroattracteur.

Des exemples de tels groupes sont les esters d'un acide carboxylique insaturé, notamment d'acide (méth)acrylique. On peut citer le methyl acrylate, l'ethyl acrylate, le propyl acrylate, le n-butyl acrylate, le phenyl acrylate, le methyl methacrylate, l'éthyle methacrylate, le propyl methacrylate, le n-butyle methacrylate, le phenyle methacrylate.

Des exemples de lactone comprennent les ester cycliques possédant de 3 à 10 atomes de carbone, et de préférence sont la propyllactone, la valerolactone, la caprolactone.

Le bloc polyoléfine (PO) peut être cristallin, tandis que le bloc du second monomère peut être polaire.

Des exemples spécifiques de tels copolymères sont le copolymère PO/PMMA, en particulier iPO/PMMA, ainsi que copolymère PO/PL (polylactone), en particulier iPO/PL.

Des exemples de copolymères blocs sont des copolymères comprenant un bloc du premier monomère qui est une première alpha-oléfine et un bloc du second monomère qui est une seconde alpha-oléfine.

De tels exemples de copolymères comprennent notamment ceux dont la première polyoléfine est cristalline et la seconde polyoléfine est cristalline, en particulier un copolymère PP/PE.

De tels exemples de copolymères comprennent notamment ceux dont la première polyoléfine est cristalline et la seconde polyoléfine est amorphe, en particulier un copolymère PP/EP.

Le bloc PP ci-dessus est par exemple un bloc iPP.

L'invention offre aussi des copolymères qui sont des copolymères blocs "vrais", à la différence des copolymères de l'art antérieur qui fournit des copolymères qui sont des mélanges.

Le poids moléculaire des homo- ou co-polymères peut varier dans une large mesure, entre 500 et $10^8$, de préférence entre 5000 et $10^6$. Le ratio, dans un copolymère, entre les monomères A et B, peut aussi varier dans une très large mesure, de 99/1 à 1/99.

L'invention fournit donc aussi des copolymères tels que décrits comme ci-dessus.

Notamment, l'invention fournit des copolymères bloc du type PP/EP (PO cristalline/PO amorphe), à l'exclusion de ceux décrits dans la publication de Yamahiro et al, Macromol. Chem. Phys, 200, 134-141 (1999), à savoir notamment ceux dont le poids moléculaire Mn est inférieur ou égal à 16000 et l'indice de polydispersité est compris entre 3.0 et 3.3. L'invention fournit donc en particulier des copolymères blocs du type PP/EP de poids moléculaire supérieur à 16000, en particulier supérieur à 20000, notamment supérieur à 50000, ainsi que des copolymères du type PP/EP dont l'indice de polydispersité est inférieur à 3, en particulier inférieur à 2,5, notamment inférieur à 2.

Les exemples suivants illustrent l'invention.

Préparation du complexe 1: Me2Si(2-Me3Si,4-tBu C5H2)2Sm(THF)2

A une solution de Me2Si(2-Me3Si,4-tBu C5H3)2 (3.01 g, 6.77 mmole) dans 60 ml de THF est ajouté 8.2ml d'une solution 1.66 M dans l'hexane, soit 13.5 mmole, de nBuLi à 0°C. Après réaction du mélange agité 6 h à température ambiante, on ajoute 20 ml d'une solution 0.68 M dans le THF, 13,6 mmole, de tBuOK. Le mélange est mis au reflux pendant 12 h et la solution est évaporée à sec. Le produit est lavé avec deux fois 30 ml d'hexane, conduisant au disel de potassium de Me2Si(2-Me3Si,4-tBu C5H3)2 sous la forme d'une poudre blanche (rendement= 70%). A 40 ml de THF, sont ajoutés en même temps à - 80°C, une suspension de 5,64 g (10,8 mmole) du disel de potassium de Me2Si (2-Me3Si,4-tBu C5H3)2 dans 80 ml de THF et 10 mmole de SmI2 dans 80 ml de THF. Ensuite le mélange réactionnel est porté au reflux pendant 12 h puis la solution est évaporée à sec. On ajoute 50 ml de toluène au résidu et le solide obtenu est séparé par centrifugation. Après élimination du solvant sous vide, le résidu est extrait par deux fois 15 ml de THF. La recristallisation d'un mélange THF/hexane conduit à 1 sous la forme d'un solide violet (rendement = 35%)

Préparation du complexe B : $Me_2Si(2\text{-}Me_3Si,4\text{-}Me_2,tBuSiC_5H_2)_2YCH(SiMe_3)_2$

A une solution de Me2Si(2-Me3Si,4-Me2,tBuSi C5H2)2YCl2Li(THF)2 (2 g, 2.3 mmole) dans 60 ml de toluene est ajouté 4,5ml d'une solution 0.79 M dans Et20, soit 3.5 mmole, de (Me3Si)2CHLi à 0°C. Le mélange est agité pendant 13 heures de 0°C à température ambiante , ensuite le solvant est évaporé sous vide. On ajoute 80 ml d'hexane au résidu et la suspension est agitée pendant 24 heures . Le solide insoluble est récupéré par centrifugation et est recristallisé de l'hexane pour conduire à B- rendement = 36%.

Préparation du complexe C : Me2Si(2-Me3Si,4-tBuSi C5H2)2SmCH(SiMe3)2

A une solution de Me2Si(2-Me3Si,4-tBu C5H2)2SmCl2Li(THF)2 (2.3 mmole) dans 60 ml de toluène est ajouté 4,5ml d'une solution 0.79 M dans Et20, soit 3.5 mmole, de (Me3Si)2CHLi à 0°C. Le mélange est agité pendant 13 heures de 0°C à température ambiante, ensuite le solvant est évaporé sous vide. On ajoute 80 ml d'hexane au résidu et la suspension est agitée pendant 24 heures. Le solide insoluble est récupéré par centrifugation et est recristallisé de l'hexane pour conduire à C - rendement = 28%.

Exemple 1:

Dans un tube de Schlenk (préalablement séché à 100 °C pendant 2 h) connecté à une ligne d'argon, muni d'un septum pour introduire les réactifs, et d'une agitation magnétique est introduit 20 ml de toluène distillé à l'aide d'une seringue. Le toluène est dégazé puis saturé en argon. Le catalyseur 1 (7.4 mg- 0.01 mmole) est introduit et l'agitation est maintenue jusqu'à dissolution complète de celui-ci. On introduit alors 2 ml de 1-pentène par le septum à l'aide d'une seringue. La polymérisation est poursuivie pendant 12 heures à température ambiante sous agitation. Pour neutraliser le catalyseur en fin de réaction, on injecte 10 ml de méthanol. Le polymère précipité est alors isolé par centrifugation, lavé par 2 fois 10 ml de méthanol et séché pendant 3 heures sous vide. L'activité catalytique est de 161 g polymère/mol de catalyseur/h, Le polymère possède les caractéristiques suivantes : Mn=10600. L'enchaînement du monomère est isotactique (mm > 95%)

Exemple 2:

On procède comme dans l'exemple 1 sauf que l'on substitue le 1-pentène par 2 ml de 1-hexène. L'activité catalytique est de 138 g polymère/mol de catalyseur/h, le polymère possède les caractéristiques suivantes : Mn=24600. L'enchaînement du monomère est isotactique (mm > 95%)

Exemple 3:

Dans un tube de Schlenk (préalablement séché à 100 °C pendant 2 h) connecté à une ligne d'argon, muni d'un septum pour introduire les réactifs, et d'une agitation magnétique est introduit 20 ml de toluène distillé à l'aide d'une seringue. Le toluène est dégazé puis saturé en argon. Le catalyseur B (8 mg- 0.01 mmole) est introduit et l'agitation est maintenue jusqu'à dissolution complète de celui-ci. On introduit alors 2 ml de 1-pentène par le septum à l'aide d'une seringue. La polymérisation est poursuivie pendant 12 heures à température ambiante sous agitation. Pour neutraliser le catalyseur en fin de réaction, on injecte 10 ml de méthanol. Il n'y pas de précipitation de polymère. Après évaporation du solvant, on recueille des traces d'oligomères de basses masses non isolables. L'activité catalytique est très faible et estimée inférieure à 10 g polymère/mol de catalyseur/h.

Exemple 4:

Dans un tube de Schlenk (préalablement séché à 100 °C pendant 2 h) connecté à une ligne d'argon, muni d'un septum pour introduire les réactifs, et d'une agitation magnétique est introduit 20 ml de toluène distillé à l'aide d'une seringue. Le toluène est dégazé puis saturé en argon. Le précurseur B (4 mg) est introduit et la solution est agitée à température ambiante jusqu'à dissolution complète de celui-ci. La solution catalytique est dégazée trois fois, puis on introduit une pression de 1 bar d'hydrogène. L'hydrogénation est effectuée pendant 30 min à température ambiante. La solution passe de l'incolore au jaune vif. L'hydrogène est ensuite chassé par un flux d'argon (5min). Le milieu réactionnel est refroidi à 0°C. On introduit alors 2 g de 1-pentène par le septum à l'aide d'une seringue. La polymérisation est poursuivie pendant 18 heures à 0°C. Pour neutraliser le catalyseur en fin de réaction, on injecte 10 ml de méthanol. Le polymère précipité est alors isolé par centrifugation, lavé par 10 ml de méthanol et séché pendant 3 heures sous vide. On recueille 1.54 g de polymère soit une conversion de 77% et une activité de 21 g polymère/g de catalyseur/h, possédant les caractéristiques suivantes : Mn=28600. L'enchaînement du monomère est isotactique (mm > 95%).

Exemple 5:

On procède comme dans l'exemple 4 en substituant le 1-pentène par 2 g de 1-hexène. La polymérisation est poursuivie pendant 12 heures à 0°C. On recueille 1.88 g de polymère soit une conversion de 94% et une activité de 39,2 g polymère/mol de catalyseur/h, possédant les caractéristiques suivantes : Mn=53000. L'enchaînement du monomère est isotactique (mm > 95%)

Exemple 6:

On procède comme dans l'exemple 5 en réalisant la polymérisation à 20 °C plutôt qu'à 0°C. On recueille 1.98 g de polymère soit une conversion de 99% et une activité de 41 g polymère/mol de catalyseur/h, possédant les caractéristiques suivantes : Mn=12900. L'enchaînement du monomère est isotactique (mm > 95%)

Exemple 7:

Dans un tube de Schlenk (préalablement séché à 100 °C pendant 2 h) connecté à une ligne d'argon, muni d'un septum pour introduire les réactifs, et d'une agitation magnétique est introduit 20 ml de toluène distillé à l'aide d'une seringue. Le toluène est dégazé puis saturé en argon. Le précurseur B (40 mg) est introduit et la solution est agitée à température ambiante jusqu'à dissolution complète de celui-ci. La solution catalytique est dégazée trois fois, puis on introduit une pression de 1 bar d'hydrogène. L'hydrogénation est effectuée pendant 30 min à température ambiante. La solution passe de l'incolore au jaune vif. L'hydrogène est ensuite chassé par un flux d'argon (5min). On introduit alors 2 ml de 1-pentène par le septum à l'aide d'une seringue. La polymérisation est poursuivie pendant 2 heures à 20°C. On introduit ensuite 2 ml de methylmethacrylate par le septum. La solution change d'aspect pour devenir opaque. Le copolymérisation est ensuite poursuivie pendant 2 heures. Pour neutraliser le catalyseur en fin de réaction, on injecte 10 ml de méthanol. Le polymère précipité est alors isolé par centrifugation et séché pendant 3 heures sous vide. Le polymère présente alors un aspect blanc gluant (présence de polyoléfine caractérisé par une GPC bimodale possédant deux pics maximum de masse environ 3000 et 60000). Le mélange de polymères est ensuite lavé par 2 fois 10 ml d'hexane (agitation dans de l'hexane pendant 2 heures) ce qui permet d'éliminer l'homopolymère oléfinique puis par 10 ml de méthanol. On recueille 0.21 g de polymère soit une activité de 5.2 g polymère/g catalyseur, possédant les caractéristiques suivantes : taux de 1-pentène = 20 % en poids, taux de MMA = 80 % en poids, Mn= 45400. Le bloc poly(1-pentène) est isotactique (mm > 95%)

Exemple 8:

On procède comme dans l'exemple 7, en substituant le précurseur B par 40 mg du précurseur C, en substituant le 1-pentène par 2 ml de 1-hexène, et le MMA par 2 ml de caprolactone. Le polymère possède les caractéristiques suivantes : taux d' 1-hexène = 12 % en poids , taux de caprolactone = 88 % en poids, Mn= 32000. Le bloc poly(1-hexène) est isotactique (mm > 95%)

Exemple 9:

Dans un tube de Schlenk (préalablement séché à 100 °C pendant 2 h) connecté à une ligne d'argon, muni d'un septum pour introduire les réactifs, et d'une agitation magnétique est introduit le précurseur B (100 mg). On introduit 3 ml de 1-hexène par le septum à l'aide d'une seringue, le milieu est t dégasé trois fois et maintenu sous vide. Puis on introduit une pression de 1 bar d'hydrogène. La polymérisation démarre immédiatement, caractérisée par une exothermie. Le milieu réactionnel devient très visqueux, la réaction est poursuivie pendant 3 minutes à 20°C. On introduit ensuite 2 ml de caprolactone par le septum. La polymérisation est ensuite poursuivie pendant 1 heure. Pour neutraliser le catalyseur en fin de réaction, on injecte 10 ml de méthanol. Le polymère précipité est alors isolé par centrifugation, lavé au méthanol et séché pendant 3 heures sous vide. Le polymère se présente sous forme d'une poudre sèche et non collante. On recueille 0.45 g de polymère soit une activité de 4.5 g polymère/g de catalyseur, possédant les caractéristiques suivantes : taux de 1-hexène = 4.5 % en poids, taux de caprolactone = 95.5 % en poids, Mn= 23100. Le bloc poly(1-hexène) est isotactique (mm > 95%)

Exemple 10:

On procède comme dans l'exemple 9, en substituant le 1-hexène par 3 ml de 1-pentène, et la caprolactone par 3 ml de MMA. On recueille 0.56 g de polymère soit une activité de 5.6 g polymère/g catalyseur, possédant les caractéristiques suivantes : taux de 1-pentène = 13.5 % en poids, taux de caprolactone = 86.5 % en poids, Mn= 54700. Le bloc poly(1-pentène) est isotactique (mm > 95%).

Exemple 11:

On procède comme dans l'exemple 9, en substituant le catalyseur B par 100 mg du catalyseur C. On recueille 0.52 g de polymère soit une activité de 5.2 g polymère/g de catalyseur, possédant les caractéristiques suivantes : taux de 1-hexène = 50% en poids, taux de caprolactone = 50% en poids, Mn= 6800. Le bloc poly (1-hexène) est isotactique (mm > 95%)

Exemple 12:

On procède comme dans l'exemple 9, en substituant le catalyseur B par 100 mg du catalyseur C et la caprolactone par 2 ml de MMA. On recueille 0.25 g de polymère soit une activité de 2.5g polymère/g catalyseur, possédant les caractéristiques suivantes : taux de 1-hexène = 52% en poids , taux de MMA = 48% en poids, Mn= 12000. Le bloc poly(1-hexène) est isotactique (mm > 95%)

Exemple 13:

On procède comme dans l'exemple 10, en substituant le catalyseur B par 100 mg du catalyseur C. On recueille 0.41 g de polymère soit une activité de 4.1 g polymère/g catalyseur, possédant les caractéristiques suivantes : taux de 1-pentène = 91% en poids, taux de MMA = 9% en poids, Mn= 6200. Le bloc poly(1-pentène) est isotactique (mm > 95%).

## Revendications

1. Procédé de préparation de copolymères blocs comprenant les étapes de polymérisation d'un premier monomère constitué par une alpha-oléfine contenant de 3 à 20 atomes de carbone en un premier bloc isotactique, à l'aide d'un catalyseur, puis polymérisation d'au moins un second monomère, ledit catalyseur étant sous la forme d'un complexe hydrure d'un métal trivalent du groupe des terres rares présentant la formule I:

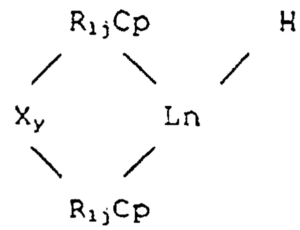

dans laquelle:

Cp est un radical cyclopentadiènyle;
chaque $R_1$, identique ou différent, est un substituant du groupe cyclopentadiènyle et est un radical alkyl ou un radical hydrocarboné contenant du silicium, contenant de 1 à 6 atomes de carbone, non substitué;
chaque j, identique ou différent, vaut 1, 2 ou 3;
X est un radical divalent alkylène contenant de 1 à 20 atomes de carbone ou $Si(R)_2$ où R est un radical alkyl ayant de 1 à 4 atomes de carbone:
y vaut 1 ou 2;
Ln est Y ou Sm.

2. Procédé selon la revendication 1, dans lequel dans la formule I, $R_{1j}Cp$ est le groupe 2-$Me_3Si$, 4-$Me_2tBuSiCp$, ou le groupe 2-$Me_3Si$,4-tBuCp.

3. procédé selon la revendication 1 ou 2, dans lequel le catalyseur est $Me_2Si(2\text{-}Me_3Si,\ 4\text{-}Me_2tBuSiCp)_2YH$ ou $Me_2Si\ (2\text{-}Me_3Si,\ 4\text{-}tBuCp)_2SmH$.

4. procédé selon l'une des revendications 1 à 3, dans lequel le catalyseur est racémique.

5. Procédé selon l'une des revendications 1 à 4, clans lequel le catalyseur est généré in situ en présence d'au moins une partie du premier monomère.

6. Procédé selon l'une des revendications 1 à 5, dans lequel le catalyseur est préparé par hydrogénation du précurseur alkyl.

7. procédé selon l'une des revendications 1 à 6, dans lequel les blocs sont des homopolymères ou des copolymères statistiques.

8. Procédé selon l'une des revendications 1 à 7, dans lequel le copolymère blocs comprend un bloc du second monomère qui est un composé vinyl, vinylidène ou lactone.

**9.** Procédé selon le revendication 8, dans lequel le composé vinyl ou vinylidène est représenté par la formule $H_2C=CR'Z$ dans laquelle R' est l'hydrogène ou un radical alkyle ayant de 1 à 12 atomes de carbone et Z est un radical électro-attracteur.

**10.** Procédé selon la revendication 9, dans lequel le composé vinyl ou vinylidène est un ester d'un acide carboxylique insaturé.

**11.** Procédé selon l'une des revendications 8 à 10, dans lequel la polyalphaoléfine est cristalline.

**12.** Procédé selon l'une des revendications 1 à 11, dans lequel le second monomère est polaire.

**13.** Procéde selon l'une des revendications 1 à 12, pour la préparation d'un copolymère polyalphaoléfine/PMMA on polyalchaoléfine/polylactone.

**14.** Procédé selon l'une des revendications 1 à 10, dans lequel le copolymère blocs comprend un bloc du second monomère qui est une alphaoléfine.

**15.** Procédé selon la revendication 14, dans lequel la première polyalphaoléfine est cristalline et la seconde polyalphaoléfine est cristalline.

**16.** Procédé selon la revendication 15, pour la préparation d'un copolymère PP/PE.

**17.** Procédé selon la revendication 13, dans lequel la première polyalphaclèfine est cristalline et la seconde polyalphaoléfine est amorphe.

**18.** Procédé selon la revendication 17, pour la préparation d'un copolymère PP/EP.

**19.** Procédé selon l'une des revendications 1 à 18, dans lequel le copolymère blocs comprend un premier bloc iPP.

**20.** Copolymère comprenant en premier bloc d'une polyoléfine cristalline dérivée d'une alphaoléfine contenant de 3 à 20 atomes de carbone et un second bloc d'une polyoléfine amorphe, à l'exclusion de copolymère PP/EP présentant une masse moléculaire Mn inférieure ou égale à 16000 et un indice de polydispersité compris entre 3 et 3,3.

**21.** Copolymère selon la revendication 20, qui est un copolymère PP/EP.

**22.** Copolymére comprenant un premier bloc d'une polyoléfine cristalline dérivée d'une alphaoléfine contenant de 3 à 20 atomes de carbone et un second bloc d'une polyoléfine cristalline.

**23.** Copolymère selon l'une des revendications 20 à 22, dans lequel le premier bloc est isotactique.

**24.** Copolymère comprenant un premier bloc d'une polyoléfine amorphe dérivée d'une alphaoléfine contenant de 3 à 20 atomes de carbone et un second bloc d'une polyoléfine amorphe.

**25.** Copolymère selon l'une des revendications 20 à 24, dans lequel les blocs sont des homopolymères ou des copolymères statistiques.

## Claims

**1.** A method of preparing block copolymers, comprising the steps of polymerizing a first monomer consisting of an alpha-olefin containing from 3 to 20 carbon atoms into a first, isotactic block, using a catalyst, then polymerizing at least one second monomer,

said catalyst being in the form of a hydride complex of a trivalent metal from the rare earth group, having the formula I:

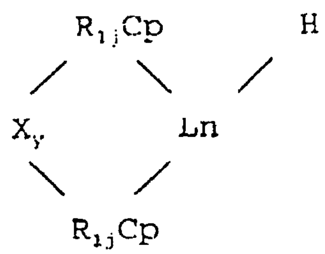

in which:

Cp is a cyclopentadienyl radical;
$R_1$, identical or different at each occurrence, is a substituent of the cyclopentadienyl group and is an alkyl radical or a silicon-containing hydrocarbon radical, unsubstituted and containing from 1 to 6 carbon atoms;
j, identical or different at each occurrence, is 1, 2 or 3;
X is a divalent alkylene radical containing from 1 to 20 carbon atoms or $Si(R)_2$ in which R is an alkyl radical having from 1 to 4 carbon atoms;
y is 1 or 2;
Ln is Y or Sm.

**2.** The method as claimed in claim 1, wherein, in the formula I, $R_{1j}Cp$ is the group 2-$Me_3Si$, 4-$Me_2$tBuSiCp or the group 2-$Me_3Si$,4-tBuCp.

**3.** The method as claimed in claim 1 or 2, wherein the catalyst is $Me_2Si$(2-$Me_3Si$, 4-$Me_2$tBuSiCp)$_2$YH or $Me_2Si$(2-$Me_3Si$,4-tBuCp)$_2$SmH.

**4.** The method as claimed in one of claims 1 to 3, wherein the catalyst is racemic.

**5.** The method as claimed in one of claims 1 to 4, wherein the catalyst is generated in situ in the presence of at least one portion of the first monomer.

**6.** The method as claimed in one of claims 1 to 5, wherein the catalyst is prepared by hydrogenation of the alkyl precursor.

**7.** The method as claimed in one of claims 1 to 6, wherein the blocks are homopolymers or random copolymers.

**8.** The method as claimed in one of claims 1 to 7, wherein the block copolymer comprises a block of the second monomer which is a vinyl, vinylidene or lactone compound.

**9.** The method as claimed in claim 8, wherein the vinyl or vinylidene compound is represented by the formula $H_2C=CR'Z$ in which R' is hydrogen or an alkyl radical having from 1 to 12 carbon atoms and Z is an electron-withdrawing radical.

**10.** The method as claimed in claim 9, wherein the vinyl or vinylidene compound is an ester of an unsaturated carboxylic acid.

**11.** The method as claimed in one of claims 8 to 10, wherein the poly-alpha-olefin is crystalline.

**12.** The method as claimed in one of claims 1 to 11, wherein the second monomer is polar.

**13.** The method as claimed in one of claims 1 to 12, for preparing a poly-alpha-olefin/PMMA or polyalpha-olefin/polylactone copolymer.

**14.** The method as claimed in one of claims 1 to 10, wherein the block copolymer comprises a block of the second monomer which is an alpha-olefin.

**15.** The method as claimed in claim 14, wherein the first poly-alpha-olefin is crystalline and the second poly-alpha-olefin is crystalline.

**16.** The method as claimed in claim 15, for preparing a PP/PE copolymer.

**17.** The method as claimed in claim 13, wherein the first poly-alpha-olefin is crystalline and the second poly-alpha-olefin is amorphous.

**18.** The method as claimed in claim 17, for preparing a PP/EP copolymer.

**19.** The method as claimed in one of claims 1 to 18, wherein the block copolymer comprises a first iPP block.

**20.** A copolymer comprising a first block of a crystalline polyolefin derived from an alpha-olefin containing from 3 to 20 carbon atoms and a second block of an amorphous polyolefin, with the exception of a PP/EP copolymer having a molecular mass Mn of less than or equal to 16 000 and a polydispersity index of between 3 and 3.3.

**21.** The copolymer as claimed in claim 20, which is a PP/EP copolymer.

**22.** A copolymer comprising a first block of a crystalline polyolefin derived from an alpha-olefin containing from 3 to 20 carbon atoms and a second block of a crystalline polyolefin.

**23.** The copolymer as claimed in one of claims 20 to 22, wherein the first block is isotactic.

**24.** A copolymer comprising a first block of an amorphous polyolefin derived from an alpha-olefin containing from 3 to 20 carbon atoms and a second block of an amorphous polyolefin.

**25.** The copolymer as claimed in one of claims 20 to 24, wherein the blocks are homopolymers or random copolymers.

**Patentansprüche**

**1.** Verfahren zur Herstellung von Blockcopolymeren, aufweisend die Schritte der Polymerisation eines ersten Monomers, das von einem 3 bis 20 Kohlenstoffatome enthaltenden alpha-Olefin gebildet wird, zu einem ersten isotaktischen Block mit Hilfe eines Katalysators, dann der Polymerisation mindestens eines zweiten Monomers,
wobei der Katalysator In der Form eines Hydrid-Komplexes eines dreiwertigen Metalls aus der Gruppe der seltenen Erden vorliegt, der die Formel 1 hat:

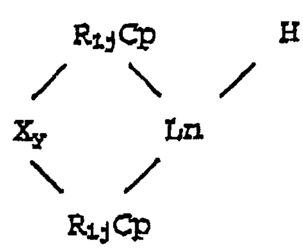

in der

Cp eine Cyclopentadienyl-Gruppe ist,

jedes $R_1$ ein Substituent der Cyclopentadienyl-Gruppe ist und eine Alkyl-Gruppe oder eine Silicium enthaltende, unsubstituierte Kohlenwasserstoff-Gruppe, die 1 bis 6 Kohlenstoffatome enthält, ist, wobei die Substituenten $R_1$ gleich oder verschieden sein können;

jedes j 1, 2 oder 3 ist, wobei j gleich oder verschieden sein kann;

X eine zweiwertige Alkylen-Gruppe, die 1 - 20 Kohlenstoffatome enthält, Ist oder $Si(R)_2$, worin R eine Alkyl-Gruppe mit 1 bis 4 Kohlenstoffatomen ist;

y 1 oder 2 ist;

Ln Y oder Sm ist.

**2.** Verfahren nach Anspruch 1, bei dem in der Formel I $R_{1j}Cp$ die Gruppe 2-$Me_3Si$,4-$Me_2tBuSiCp$ oder die Gruppe 2-$Me_3Si$, 4-tBuCp ist.

**3.** Verfahren nach Anspruch 1 oder 2, bei dem der Katalysator $Me_2Si$(2-$Me_3Si$, 4-$Me_2tBuSiCp)_2XH$ oder $Me_2Si$(2-$Me_3Si$,4-$tBuCp)_2SmH$ ist.

**4.** Verfahren nach einem der Ansprüche 1 bis 3, bei dem der Katalysator racemisch ist.

**5.** Verfahren nach einem der Ansprüche 1 bis 4, bei dem der Katalysator in situ in Anwesenheit mindestens eines Teils des ersten Monomers erzeugt wird.

**6.** Verfahren nach einem der Ansprüche 1 bis 5, bei dem der Katalysator durch Hydrierung des Alkyl-Vorläufers hergestellt wird.

**7.** Verfahren nach einem der Ansprüche 1 bis 6, bei dem die Blöcke Homopolymere oder statistische Copolymere sind.

**8.** Verfahren nach einem der Ansprüche 1 bis 7, bei dem der Copolymerblock einen Block des zweiten Monomers, das eine Vinyl-, Vinyliden- oder Lacton-Verbindung ist, aufweist.

**9.** Verfahren nach Anspruch 8, bei dem die Vinyl-oder Vinyliden-Verbindung dargestellt wird durch die Formel $H_2C{=}CR'Z$, in der R' Wasserstoff oder eine Alkyl-Gruppe mit 1 bis 12 Kohlenstoffatomen ist und Z eine elektronenanziehende Gruppe ist.

**10.** Verfahren nach Anspruch 9, bei dem die Vinyl- oder Vinyliden-Verbindung ein Ester einer ungesättigten Carbonsäure ist.

**11.** Verfahren nach einem der Ansprüche 8 bis 10, bei dem das Poly-alpha-Olefin kristallin ist.

**12.** Verfahren nach einem der Ansprüche 1 bis 11, bei das zweite Monomer polar ist.

**13.** Verfahren nach einem der Ansprüche 1 bis 12 zur Herstellung eines Poly-alpha-Olefin/PMMA- oder Poly-alpha-Olefin/Polylacton-Copolymers.

**14.** Verfahren nach einem der Ansprüche 1 bis 10, bei dem das Blockcopolymer einen Block des zweiten Monomers, das ein alpha-Olefin ist, aufweist.

**15.** Verfahren nach Anspruch 14, bei dem das erste Poly-alpha-Olefin kristallin ist und das zweite Poly-alpha-Olefin kristallin ist.

**16.** Verfahren nach Anspruch 15 zur Herstellung eines PP/PE-Copolymers.

**17.** Verfahren nach Anspruch 13, bei dem das erste Poly-alpha-Olefin kristallin ist und das zweite Poly-alpha-Olefin amorph ist.

**18.** Verfahren nach Anspruch 17 zur Herstellung eines PP/EP-Copolymers.

**19.** Verfahren nach einem der Ansprüche 1 bis 18, bei dem das Blockcopolymer einen ersten iPP-Block aufweist.

**20.** Copolymer aufweisend einen ersten Block aus einem kristallinen Poly-Olefin, das von einem 3 bis 20 Kohlenstoffatome enthaltenden alpha-Olefin abgeleitet ist, und einen zweiten Block aus einem amophen Polyolefin, ausgenommen ein PP/EP-Copolymer mit einer Molmasse Mn unterhalb oder gleich 16.000 und einem Polydispersitätsindex zwischen 3 und 3,3.

**21.** Copolymer nach Anspruch 20, das ein PP/EP-Copolymer ist.

**22.** Copolymer aufweisend einen ersten Block aus einem kristallinen Polyolefin, das von einem 3 - 20 Kohlenstoffatomen enthaltenden alpha-Olefin abgeleitet ist, und einen zweiten Block aus einem kristallinen Polyolefin.

**23.** Copolymer nach einem der Ansprüche 20 bis 22, bei dem der erste Block isotaktisch ist.

**24.** Copolymer aufweisend einen ersten Block aus einem amorphen Polyolefin, das von einem 3 bis 20 Kohlenstoffatomen enthaltenden alpha-Olefin abgeleitet ist, und einen zweiten Block aus einem amorphen Polyolefin,

**25.** Copolymer nach einem der Ansprüche 20 bis 24, bei dem die Blöcke Homopolymere oder statistische Copolymere sind.